# DEMANDE DE BREVET EUROPEEN

(11) **EP 2 752 796 A1**
(43) Date de publication de la demande: **09.07.2014**
(21) Numéro de dépôt: 14150051.2
(22) Date de dépôt: 02.01.2014
(51) Int. Cl.: G06Q 10/06, H04N 21/235, H04N 21/4147, H04N 21/431, H04N 21/443, H04N 21/8543, G06Q 30/06

(54) **Procédé de génération d'un menu de présentation de programmes audiovisuels payés par plusieurs utilisateurs, dispositif et programme d'ordinateur pour la mise en oeuvre du procédé**

(30) Priorité: 08.01.2013 FR 1350139; 15.02.2013 FR 1351302
(71) Demandeur: Orange, 75015 Paris (FR)
(72) Inventeur: Schorter, Loïc, 75020 Paris (FR); Gatefin, Jérôme, 92140 Clamart (FR); Duperray, Camille, 75015 Paris (FR); Nowazk, Wojtek, 92120 Montrouge (FR)
(74) Mandataire: Benezeth, Philippe J.L. M.

(57) **Abrégé**

L'invention concerne un procédé de génération sur l'écran d'un récepteur tel qu'un décodeur, d'une tablette numérique, d'un smartphone, etc, d'un menu de présentation de contenus audio et audiovisuels. Ces contenus sont téléchargeables d'un réseau de diffusion ou de sites dédiés. Au moins un utilisateur sélectionne des contenus accessibles et effectuent le paiement afin de les rendre disponibles au niveau du récepteur. Le récepteur récupère des informations de disponibilité de l'ensemble des contenus à partir du récepteur et requiert l'affichage d'un menu de présentation présentant une liste des contenus disponibles. Ainsi chaque utilisateur prend connaissance de l'ensemble des contenus disponibles à partir du récepteur y compris ceux achetés par d'autres utilisateurs. Le menu de présentation peut associer visuellement chaque document avec l'identité de l'utilisateur ayant rendu disponible ledit document. Le menu de présentation peut afficher une indication sur le fait que la reproduction d'un contenu disponible a déjà commencé et a été interrompue à un certain moment, ce moment est rendu visible à l'affichage.

## Description

### 1. Domaine de l'invention

L'invention concerne un procédé de génération d'un menu de présentation de programmes audiovisuels au sein d'un récepteur audiovisuel et un récepteur muni d'un tel procédé de génération. L'invention s'applique notamment dans le cas où l'accès aux programmes audiovisuels est payant et acquis par plusieurs utilisateurs.

### 2. Art antérieur

De nos jours, un réseau de diffusion numérique transmet des programmes audio ou audiovisuels destinés à être reproduits sur des récepteurs, ainsi que des données de service signalant notamment les programmes diffusés actuellement et dans les jours à venir. Un Guide Electronique de Programme récupère les données de service et affiche sur un écran un menu de sélection qui présente à l'utilisateur les programmes actuellement diffusés sur les canaux accessibles par le récepteur. Ledit guide possède des moyens de navigation et de sélection d'un programme donné.

Ces programmes sont listés dans une table contenant des informations les caractérisant telles que : le titre du programme, l'heure et la date de diffusion, le canal de diffusion, le type d'abonnement, la langue, le niveau de contrôle parental, etc. L'accès à un document peut être payant. Dans ce cas, le document peut faire partie de l'abonnement que l'utilisateur paye généralement chaque mois, ou le document est acheté indépendamment de tout autre programme. Ce dernier service, plus connu comme service VOD (de l'Anglais : « Video On Demand ») permet à un utilisateur de télécharger ponctuellement un contenu et/ou de le reproduire au cours d'une durée déterminée. Ainsi, un utilisateur peut acheter l'accès à un film pendant 24 heures et demander au serveur de transmettre autant de fois qu'il le désire ce document au cours des 24 heures qui suivent l'achat.

Lorsque plusieurs utilisateurs partagent un même récepteur, ils peuvent acquérir des droits de reproduction indépendamment les uns des autres. Si les utilisateurs ne communiquent pas entre eux pour s'informer des documents qui ont été effectivement achetés, un utilisateur ne connaît pas les acquisitions effectuées par les autres et ignore l'ensemble des programmes audiovisuels ou visuels actuellement disponibles à partir de ce récepteur. Au pire, il est possible qu'un utilisateur fasse l'acquisition de droits pour accéder à un programme qu'un autre utilisateur a déjà acheté sur le même récepteur. Il existe donc un réel besoin d'une interface ergonomique et conviviale permettant de présenter des contenus audio ou audiovisuels qui sont disponibles à partir d'un récepteur et ce quelles que soit les moyens qui les ont rendu disponibles.

### 3. Objectifs de l'invention

La présente invention propose une nouvelle interface utilisateur permettant de sélectionner un programme audiovisuel à l'aide d'un menu de sélection présentant une pluralité de programmes disponibles au niveau d'un récepteur.

### 4. Exposé de l'invention

En effet, selon un aspect fonctionnel, l'invention concerne un procédé de génération d'un menu de présentation de contenus audio ou audiovisuels accessibles par au moins un réseau numérique. Le procédé comporte une étape de réception d'un ensemble d'identificateurs de contenus accessibles aptes à être, après paiement, disponibles au niveau d'un récepteur. Le procédé comporte en outre une étape de récupération des informations de disponibilité de l'ensemble des contenus à partir du récepteur et une étape de génération de signaux d'affichage d'un menu apte à présenter une liste de l'ensemble desdits contenus disponibles.

De cette manière, tous les contenus disponibles depuis le récepteur sont visibles sur un même menu de présentation.

A noter que les contenus accessibles peuvent être rendus disponibles par une même personne ou par une pluralité de personnes. Le récepteur peut être unique ou être inclus dans un ensemble de récepteurs appartenant à un même groupe d'utilisateurs, par exemple une famille, une entreprise, etc. L'ensemble de récepteurs inclut par exemple au moins un décodeur et/ou au moins un smartphone et/ou au moins une tablette, etc.

Les différents modes particuliers de réalisation mentionnés ci-après peuvent être ajoutés indépendamment ou en combinaison les uns avec les autres, aux étapes du procédé de génération défini ci-dessus.

Selon un mode particulier de réalisation, le paiement est réalisé par plusieurs utilisateurs rendant disponibles certains contenus pour chacun des utilisateurs.

De cette manière, plusieurs utilisateurs prennent connaissance de l'ensemble des contenus disponibles à partir d'un même récepteur y compris ceux achetés par d'autres utilisateurs.

Selon un autre mode particulier de réalisation, chaque document est visuellement associé à l'affichage avec l'identité de l'utilisateur ayant rendu disponible ledit document. De cette manière, un utilisateur est informé de l'identité de celui qui a acheté le contenu.

Selon un autre mode de réalisation, les paiements sont effectués par des moyens de paiement différents. De cette manière, chaque utilisateur peut utiliser son moyen de paiement pour rendre disponible le contenu désiré.

Selon un autre mode de réalisation, la liste des contenus disponibles est ordonnée à l'affichage en fonction des utilisateurs ayant payé lesdits contenus. De cette manière, l'utilisateur peut immédiatement voir les groupes de documents que les différents utilisateurs ont achetés.

Selon un autre mode de réalisation, les paiements associés aux contenus disponibles sont gérés par un serveur distinct du récepteur utilisé pour la reproduction des contenus. De cette manière, ce serveur centralise les informations de disponibilité de l'ensemble des contenus à partir du récepteur déterminé et est capable de fournir à la demande les dites informations.

Selon un autre mode de réalisation, un contenu disponible est téléchargé dans la mémoire d'un récepteur destiné à le reproduire, ledit contenu est effacé de la mémoire du récepteur lorsque la durée de disponibilité de ce contenu est écoulée. De cette manière, la mémoire du récepteur peut être consacrée aux téléchargements d'autres contenus.

Selon un autre mode de réalisation, la reproduction d'un document disponible peut être interrompue à la demande de l'utilisateur, la reproduction est reprise une durée déterminée avant l'interruption de la reproduction. De cette manière, l'utilisateur peut revenir un peu en arrière et ainsi mieux se rappeler de ce qui s'est passé immédiatement avant l'interruption.

Selon un mode particulier de réalisation, la liste des contenus disponibles est mémorisée dans une carte à puce, l'affichage incluant une étape de lecture des données mémorisée dans la carte pour afficher sur un récepteur lecteur de ladite carte la liste des contenus disponibles. De cette manière, chaque utilisateur peut introduire sa carte à puce dans le récepteur et ainsi communiquer ses droits d'accès qui s'agglomèrent à ceux déjà mémorisés dans le récepteur.

Selon un autre aspect matériel, l'invention concerne également un récepteur comportant un moyen de génération d'un menu de présentation de contenus audio ou audiovisuels accessibles par au moins un réseau numérique. Le récepteur dispose également d'un moyen de réception d'un ensemble d'identificateurs de contenus accessibles et au moins un moyen de paiement pour rendre disponibles certains contenus. Le récepteur dispose en outre d'un moyen de récupération des informations de disponibilité de l'ensemble des contenus à partir du récepteur, ledit moyen de génération générant des signaux d'affichage d'un menu apte à présenter une liste de l'ensemble desdits contenus disponibles.

Selon un autre aspect matériel, l'invention concerne également un programme d'ordinateur caractérisé en ce qu'il comprend des instructions de code de programme pour la mise en oeuvre d'une étape de génération d'un menu de sélection tel que décrit plus haut lorsque ce programme est exécuté par un processeur.

### 5. Liste des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :
- la figure 1 présente un diagramme bloc d'un récepteur audiovisuel pour la mise en oeuvre d'un exemple de réalisation de l'invention,
- la figure 2 présente un ordinogramme des étapes du procédé selon un exemple de réalisation de l'invention,
- la figure 3 illustre un exemple particulier d'un menu de présentation permettant à l'utilisateur de sélectionner des contenus audiovisuels et de les reproduire.

### 6. Description d'un mode de réalisation de l'invention

### 6.1 Principe général

L'invention concerne un procédé de génération d'un menu au moyen d'un récepteur tel qu'une passerelle domestique ou d'un décodeur, une tablette numérique, un smartphone, etc, d'un menu de présentation de contenus audio et/ou audiovisuels.

Ces contenus sont téléchargeables d'un réseau de diffusion ou de sites dédiés. Une pluralité d'utilisateurs sélectionnent des contenus accessibles et effectuent le paiement afin de les rendre disponibles au niveau du récepteur. Le récepteur récupère des informations de disponibilité de l'ensemble des contenus à partir du récepteur et requiert l'affichage d'un menu de présentation présentant une liste des contenus disponibles. Le menu de présentation résultant associe visuellement chaque document avec l'identité de l'utilisateur ayant rendu disponible ledit document. Le menu de présentation affiche une indication sur le fait que la reproduction d'un contenu disponible a déjà commencé et a été interrompue à un certain moment, ce moment est rendu visible à l'affichage. L'utilisateur demande le téléchargement du contenu sélectionné sur son récepteur et le récepteur contrôle si la reproduction locale s'effectue bien dans le laps de temps autorisé.

### 6.2 Description d'un mode de réalisation

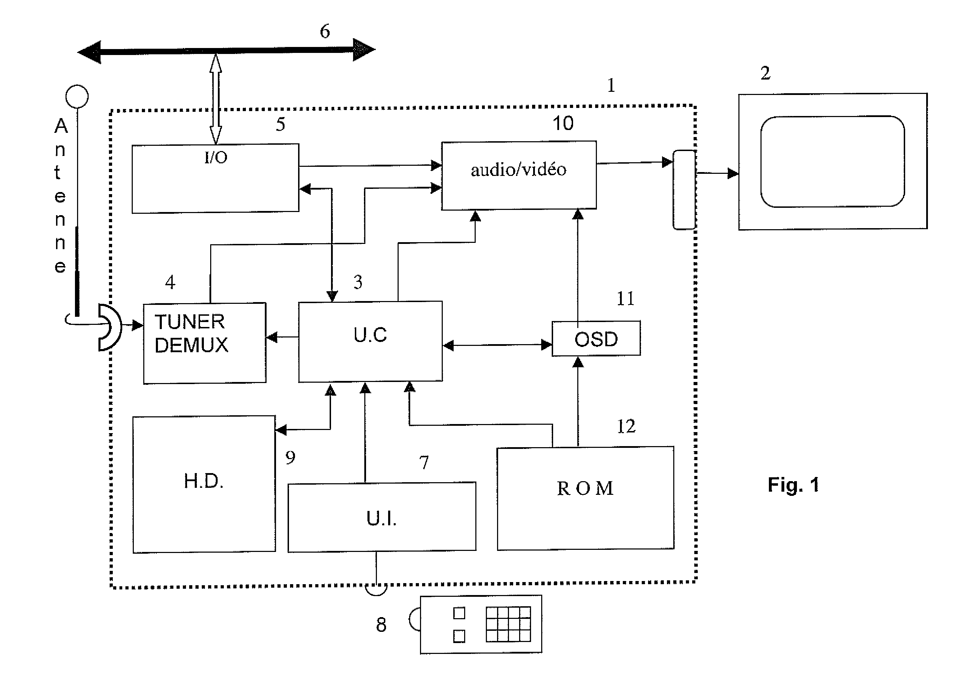

La **FIG.1** présente les éléments d'un récepteur audiovisuel 1 muni d'un dispositif d'affichage 2 selon un exemple de réalisation de l'invention. Le récepteur audiovisuel 1, par exemple un décodeur appelé en Anglais « Set top box », comprend une unité centrale 3 reliée à une mémoire de programme 12, des moyens de réception tels qu'un démodulateur 4 et un démultiplexeur pour recevoir des données audio/vidéo d'un réseau de diffusion à travers une antenne de réception. En variante, le récepteur audiovisuel 1 et le dispositif d'affichage 2 sont intégrés dans un même récepteur qui est par exemple, un ordinateur portable. En variante ou complément, le récepteur 1 peut être doté d'une interface 5 pour la communication avec un bus numérique à haut débit 6 permettant de transmettre des données audiovisuelles en temps réel, via éventuellement un modem. Le réseau 6 est typiquement Internet. L'unité centrale dispose d'une puissance de traitement élevé pour réaliser le décodage des données d'image et la génération de signaux d'affichage. Le récepteur 1 comprend en outre une interface utilisateur 7 comportant un récepteur de signaux infrarouge pour recevoir les signaux d'une télécommande 8, une mémoire 9 pour le stockage des données de service (typiquement un disque dur, H.D. en abrégé), et une logique de décodage audio/vidéo 10 pour la génération des signaux audiovisuels envoyés à l'écran 2. La télécommande est dotée des touches de direction ↑, ↓, →, ← et d'autres touches telles que : « GC», « Sélection », « Exit », « téléchargement », « paiement »... dont nous verrons le rôle plus loin dans la description. Selon une variante de réalisation, l'interface est constituée d'un écran tactile, le récepteur 1 peut dans ce cas être un smartphone, ou une tablette tactile. Selon une autre variante de réalisation, l'interface utilisateur 7 comporte une souris animant les déplacements d'un curseur sur l'écran 2. La souris dispose de touches permettant à l'utilisateur de sélectionner une icône placée sous le curseur, et d'introduire une commande de validation. Les icônes sont associées aux mêmes appellations que celles des touches de la télécommande listées plus haut. Selon une autre variante de réalisation, le récepteur dispose d'un module de reconnaissance vocale permettant d'introduire vocalement des commandes de sélection, de validation, et de déplacement d'un curseur.

Le récepteur 1 comprend également un circuit 10 pour l'affichage direct des émissions audiovisuelles reçues par le réseau de diffusion ou par le bus numérique 6 et, un circuit 11 d'incrustation de données, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un logo correspondant à la chaîne visualisée) et des images, et qui permet de mettre à jour le menu de présentation conformément à la présente invention. Le circuit OSD est contrôlé par l'Unité Centrale 3 et une application de Guide de Contenu (GC en abrégé) contenue dans la mémoire 12. L'application GC peut être résidente dans une mémoire ROM, ou téléchargée et enregistrée dans une mémoire inscriptible. Une variante consiste en ce que l'application GC est réalisée sous la forme d'un circuit spécialisé, de type ASIC par exemple, implémenté dans le récepteur 1. Le récepteur 1 dispose également de moyens d'acquisition de droits d'accès à des documents. Selon un premier mode de réalisation, ces moyens consistent à identifier la personne utilisant le récepteur et à rechercher l'ensemble des documents disponibles par son abonnement. Un autre mode de réalisation consiste à disposer d'un moyen de paiement au niveau du récepteur (un lecteur de carte bancaire par exemple) et à acheter les droits d'accès à un document à partir du récepteur 1.

Le réseau (terrestre, satellite ou câble) diffuse des programmes audio et/ou audiovisuels plus communément appelés « service » et des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI). Elles se présentent sous la forme de tables et de descripteurs qui décrivent les objets émis sur un réseau. Un service est une suite ininterrompue d'événements diffusés sur un flux déterminé.

Typiquement, on trouve dans les flux conformes au standard DVB-SI les tables suivantes : NIT, SDT, EIT, PAT, PMT et éventuellement BAT. La table NIT définit la structure générale du réseau et indique la liste des flux de transport et des services diffusés. La table SDT donne des informations supplémentaires relatives aux services, par exemple le nom en clair d'un service. La table EIT indique une liste d'événements pour chaque service. Elle permet notamment d'indiquer l'événement en cours de diffusion. La table PAT associe une table PMT à un service. La table PMT contient la liste des flux élémentaires contenus dans un service (ex : liste des langages audio, vidéo, sous-titre disponible) et contient toutes les informations nécessaires pour sélectionner ce service avec les flux élémentaires désirés (un PID identifie chaque flux élémentaire du service). La table BAT rassemble quant à elle plusieurs services en un bouquet de services qui peuvent être issus de plusieurs réseaux de diffusion. Lors de l'installation des services, le récepteur 1 filtre la table NIT pour y extraire les informations des canaux du réseau, puis le récepteur va se positionner sur chaque canal pour en extraire la table SDT afin de retrouver la liste des services avec leurs noms et leurs identificateurs. A la fin de l'installation, le récepteur 1 possède dans sa mémoire 9 une liste de services avec pour chacun, un identificateur unique : le triplet DVB. Les trois composantes d'un service sont : l'identifiant du réseau, l'identifiant du canal fréquentiel, l'identifiant du service diffusé sur ce canal, le triplet se note (OriginalNetworkId, TransportStreamId,ServiceId) dans la standard précité. A l'aide des tables PAT et PMT diffusant des listes de triplet DVB, le récepteur 1 est capable de rechercher le flux qui diffuse le service désiré par l'utilisateur. L'application GC peut ainsi récupérer les informations des programmes diffusés et programmer le téléchargement du programme sélectionné par l'utilisateur.

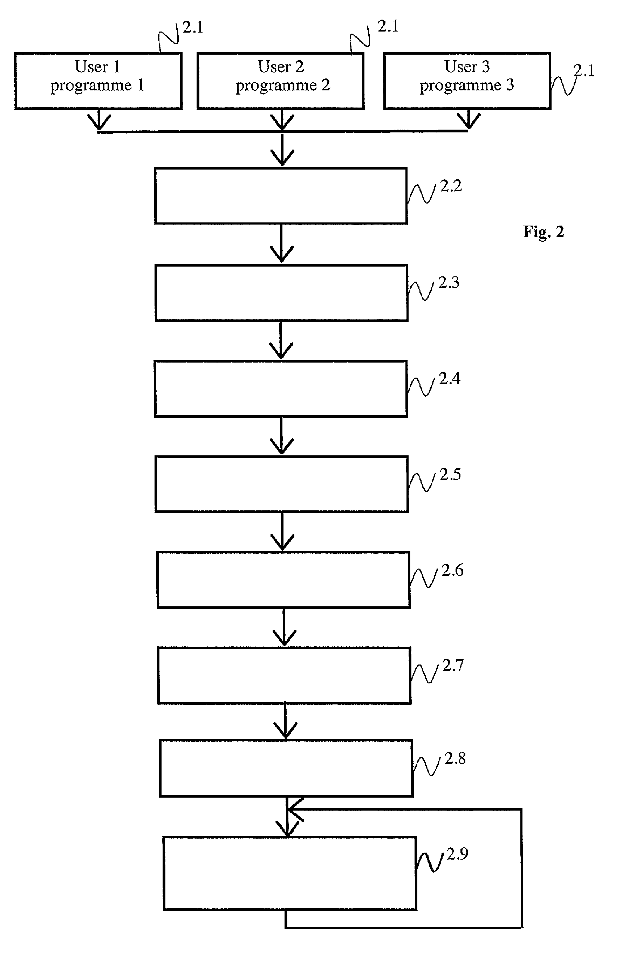

A l'aide de l'organigramme de la Fig. 2, nous allons maintenant décrire un exemple de déroulement d'opérations permettant à un utilisateur de sélectionner des contenus, de les télécharger et de les reproduire. Dans cet exemple, les contenus sont rendus disponibles par une pluralité d'utilisateurs du récepteur. Rappelons, néanmoins, que l'invention s'applique au cas où un seul utilisateur rend disponible un contenu. Rappelons enfin que le menu généré selon l'invention est accessible par un utilisateur voire plusieurs utilisateurs d'un même groupe d'utilisateurs, par exemple une famille. Dans un premier temps, des étapes 2.1 sont effectuées permettant à différents utilisateurs d'acquérir des droits d'accès pour une pluralité de documents audio ou audiovisuels, ces droits d'accès étant généralement associés à une durée de disponibilité. Les moyens de paiements utilisés par chaque utilisateur peuvent être différents (carte bancaire, abonnements, VOD...). Ces droits d'accès sont associés au récepteur 1 qui peut recevoir et reproduire lesdits documents achetés.

Dans un second temps, un utilisateur désire connaître l'ensemble des documents accessibles à partir de ce récepteur 1 et qu'il peut notamment reproduire. A l'étape 2.2, il lance l'application GC en appuyant sur la touche correspondante sur sa télécommande, ou en activant l'icône, ou par la voix si le récepteur 1 est doté d'une reconnaissance vocale. Le lancement de l'application s'effectue de façon sécurisée, l'utilisateur introduisant un identifiant et un code. L'application GC récupère les informations des contenus accessibles au niveau du récepteur à partir de divers catalogues disponibles sur les réseaux accessibles (étape 2.3). La récupération des informations s'effectue par exemple, en analysant les tables transmises sur un service audiovisuel et reçues par le Tuner 4, et en déterminant la liste des documents diffusés par le réseau. L'application GC émet également des requêtes à travers le module I/O 5 pour questionner des serveurs distant d'éditeurs de contenus pour connaître l'accessibilité de contenus et à quel prix. La liste des serveurs distants est mémorisée dans le récepteur 1 et peut être modifiée à l'aide d'un menu de configuration de l'application GC. A l'étape 2.4, l'application GC émet une requête d'état des contenus payés vers un serveur de gestion des contenus payés (en abrégé « SGCP »). En retour, le récepteur 1 reçoit la liste des contenus pour lesquels un utilisateur du récepteur 1 a acquis des droits et qui peut être reproduits sur le récepteur 1 sans paiement supplémentaire. Pour clarifier la suite du document, un contenu est qualifié « accessible » lorsqu'il peut être transmis au récepteur 1 en contrepartie d'un paiement, et « disponible » lorsque l'accès à ce contenu est déjà payé ou est gratuit, il peut alors être reproduit sur ce récepteur.

A l'étape 2.5, l'application GC dispose d'informations concernant des documents accessibles et disponibles en vue de générer un menu de présentation. Le récepteur émet des signaux d'affichage représentatif d'un menu à destination de l'écran 2.

Le menu affiché sur l'écran présente à l'utilisateur des informations telles que :
- la liste des contenus accessibles,
- le prix pour télécharger les contenus accessibles et la durée d'accessibilité,
- la liste des contenus disponibles sur le récepteur 1 car déjà payé,
- la durée de la disponibilité de ces contenus.

D'autres informations complémentaires sont éventuellement affichées, telles que :
- la source (réseau de diffusion, site Web) des contenus accessibles,
- la durée au cours de laquelle le contenu est disponible au prix indiqué,
- une indication que le contenu disponible est stocké en local dans le récepteur 1,
- une indication que la reproduction d'un contenu disponible est commencée,
- liste de contenus sélectionnés dont l'accès est non payé,
- l'identité de l'utilisateur ayant acquis les droits pour chaque contenu.

D'autres informations affichables sont possibles.

Puis, l'application GC attend une commande de l'utilisateur. Ce dernier peut naviguer sur les listes affichées et à l'étape 2.6, mettre dans le focus l'identificateur d'un contenu pour lequel il désire l'accès. Une fois le focus positionné sur l'identificateur du contenu désiré, l'utilisateur valide son choix et lance l'étape de paiement (étape 2.7). Le paiement s'effectue selon une technique connue en soi qu'il n'y a pas lieu de détailler d'avantage.

Une fois le paiement effectué, à l'étape 2.8, le serveur qui valide le paiement émet un récépissé attestant du paiement et informe le serveur SGCP que ce contenu est désormais disponible pour ce récepteur. De façon optionnelle, un transfert du contenu dans la mémoire 9 du récepteur peut être déclenché. Ce transfert permet de lancer, sous le contrôle de l'application GC, la reproduction en local d'un contenu téléchargé.

Tant que le menu de présentation reste à l'écran, l'application GC est maintenue active et gère en temps réel les informations affichées. De ce fait, si un contenu cesse d'être disponible car le délai de disponibilité est expiré, l'application GC l'efface de la liste des contenus disponibles. De cette manière, l'utilisateur est constamment informé des contenus réellement disponibles au niveau de son récepteur 1 et ce quel que soit l'utilisateur qui a permis de les rendre disponibles. Selon un perfectionnement, l'application GC supprime de la mémoire 9 du récepteur un contenu téléchargé dont la disponibilité est écoulée (étape 2.9). De cette façon, la mémoire du récepteur peut être utilisée aux téléchargements d'autres contenus.

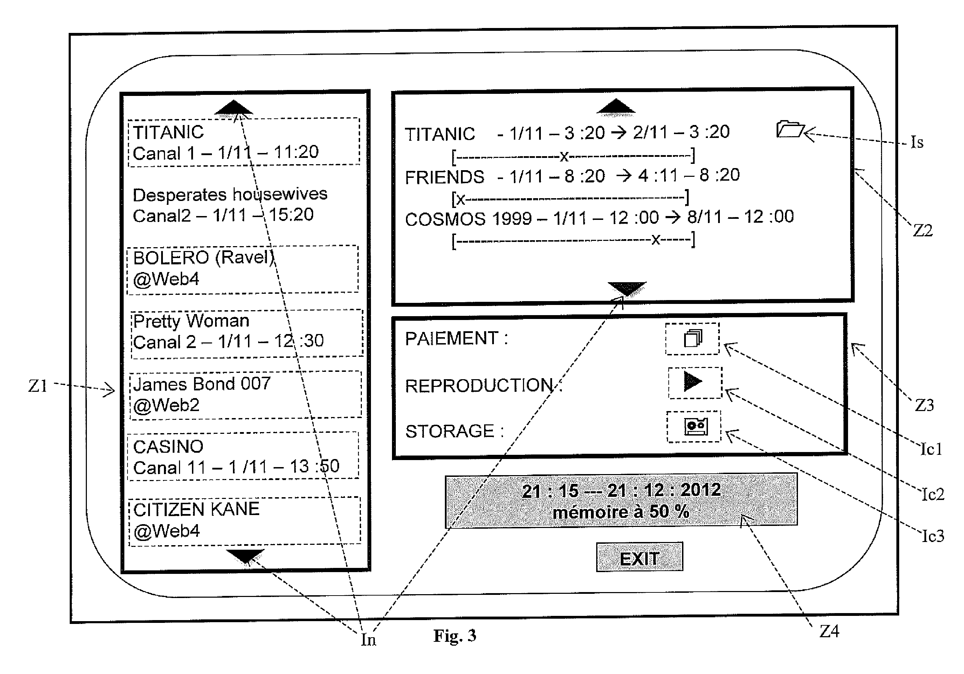

La Fig. 3 présente un exemple particulier d'un menu de présentation permettant à l'utilisateur de sélectionner des contenus audiovisuels et de les reproduire. Le contenu du menu affiché peut considérablement varier notamment en fonction de la taille de l'écran.

Les contenus audiovisuels ou audio accessibles sont présentés dans une zone Z1 sous la forme d'icônes sélectionnables. L'icône représente une boîte contenant typiquement le titre du contenu et une image, par exemple l'affiche de l'émission. Eventuellement, l'icône contient également la source permettant de télécharger ce contenu et son prix. Des icônes de navigation In permettent de faire défiler la liste. La boîte identifiant un contenu qui possède le focus apparaît avec une distinction graphique telle qu'une surbrillance, un clignotement, une couleur particulière, etc...

Une zone Z2 présente l'ensemble des contenus disponibles. Selon une variante de réalisation, la zone Z2 est agrandie et remplit une grande partie de la surface utile de l'écran 2, la zone Z1 n'étant plus affichée. De cette manière l'utilisateur peut prendre plus facilement connaissance de l'ensemble des contenus disponibles à partir du récepteur 1. L'identification de ces contenus est de préférence le même que dans Z1 : titre, image, .... L'identificateur est associé à une indication des informations de disponibilité des contenus comme par exemple une indication d'une plage temporelle indiquant la durée de disponibilité du contenu. Cette plage temporelle est par exemple indiquée par une date et heure de début et une date et heure de fin. En variante, la zone Z2 indique la durée restante de disponibilité de ce contenu. L'identificateur est également associé à une indication que la reproduction de ce contenu a déjà commencée. Cette indication est avantageusement fournie par un texte du type « reproduction commencée depuis 30 minutes 15 secondes ». L'indication peut également être affichée sous la forme d'une ligne de temps représentant le contenu avec un index posé sur la ligne qui représente le moment de son interruption. La disponibilité des contenus affichés étant continuellement mise à jour dans le menu, il n'est pas possible de lancer la reproduction d'un contenu dont la durée de disponibilité est écoulée, en le sélectionnant par son icône dans Z2.

Selon un mode particulier de réalisation, l'identificateur du contenu est également associé à l'identité de l'utilisateur ayant fait l'acquisition du droit d'accès à ce contenu. Cet identificateur est par exemple le nom et le prénom de l'utilisateur. De cette manière, l'utilisateur peut connaître les contenus dont il a fait récemment l'acquisition. Il est aussi informé des acquisitions faites par les autres utilisateurs en identifiant ceux-ci.

Selon un mode particulier de réalisation, les contenus disponibles affichés dans la zone Z2 sont ordonnés en fonction des utilisateurs à l'origine du droit d'accès. Ainsi, il est possible de voir immédiatement les groupes de documents que les différents utilisateurs ont achetés.

L'identificateur peut être également associé à une icône Is indiquant que le contenu est mémorisé dans le récepteur. Ceci informe l'utilisateur que sa reproduction ne nécessitera pas de temps de chargement, le contenu étant déjà dans son récepteur et n'a pas besoin d'être téléchargé d'un réseau. Comme il a été dit précédemment, l'application GC met à jour le contenu de Z2 et efface systématiquement les contenus qui ne sont plus disponibles.

Une zone Z3 contient des icônes de commandes. Cette zone Z3 peut être évitée si la télécommande 8 dispose des touches déclenchant les mêmes actions. La zone Z3 comporte une icône Ic1 pour déclencher le paiement d'un contenu dont l'identificateur en Z1 possède le focus. Lorsque l'utilisateur active cet icône, un menu apparaît en surimpression permettant à l'utilisateur de réaliser le paiement. Ensuite, le contenu apparaît en zone Z2 montrant ainsi que ce contenu est devenu disponible. La zone Z3 contient également une icône Ic2 pour déclencher la reproduction d'un contenu dont l'identificateur en Z2 possède le focus. Selon un perfectionnement, si la reproduction de ce contenu a déjà commencée, elle reprend à partir d'un court laps de temps avant le moment où elle s'est arrêtée, ce laps de temps est par exemple de 30 secondes. Ce laps de temps peut être modifié par l'utilisateur par un menu de configuration, ainsi ce laps de temps peut être rendu nul.

La zone Z3 contient également une icône Ic3 pour déclencher le stockage d'un contenu en local dont l'identificateur en Z1 possède le focus et qui vient d'être payé. L'utilisateur peut aussi déclencher le stockage en local pour un document disponible dont l'identificateur apparaît avec le focus dans la zone Z2. De même, l'utilisateur peut en sélectionnant une seconde fois l'icône Ic3 avec un focus placé sur un contenu dans Z2, déclencher l'effacement de ce contenu en mémoire locale. De cette façon, l'utilisateur peut facilement gérer son espace mémoire.

Le menu de présentation dispose également d'une zone Z4 d'état. Cette zone affiche typiquement l'heure et la date courante, et éventuellement le taux de chargement de la mémoire 9. Cette indication est utile si l'utilisateur désire stocker un contenu en local, il peut ainsi vérifier que l'opération est possible. Enfin, le menu de présentation dispose d'une icône «EXIT» pour sortir du menu et clore l'exécution de l'application, et d'une icône « CONFIG » pour accéder à un menu de configuration.

Le menu de présentation dispose également d'une zone listant des contenus préférés (non représentés dans la figure 3). Les identificateurs des contenus visibles dans cette zone sont associés à un indicateur montrant si le paiement a été effectué ou non. Cette zone permet à l'utilisateur de « mettre de coté » rapidement certains contenus et de déterminer plus tard, s'il souhaite vraiment payer pour acquérir les droits associés.

### 6.3 Description d'une variante de réalisation

Selon un mode particulier de réalisation, l'application GC est téléchargeable dans des terminaux audiovisuels à partir d'un site dédié. Une fois lancée, l'utilisateur s'authentifie en introduisant un identifiant et un code secret. Une variante consiste en ce que le récepteur dispose d'un lecteur de carte à puce, l'utilisateur introduisant une carte privative qui contient son identifiant et ses droits, il introduit ensuite son code. De cette façon, l'utilisateur peut commencer la reproduction d'un contenu sur un récepteur donné et arrête la reproduction. Puis, il s'authentifie sur un autre récepteur disposant de l'application GC et lance la reproduction du document à partir du moment où celle-ci a été interrompue. Il peut également à partir de cet autre récepteur, consulter l'ensemble des contenus disponibles qui apparaît en zone Z2 et lancer la reproduction d'un contenu à son début.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Procédé de génération d'un menu de présentation de contenus audio ou audiovisuels accessibles par au moins un réseau numérique, comportant une étape de réception d'un ensemble d'identificateurs de contenus accessibles aptes à être, après paiement, disponibles au niveau d'un récepteur (1) ; **caractérisé en ce qu'**il comporte une étape de récupération (2.4) des informations de disponibilité de l'ensemble des contenus à partir du récepteur (1) et une étape de génération de signaux d'affichage (2.5) d'un menu apte à présenter une liste de l'ensemble desdits contenus disponibles.

2. Procédé de génération d'un menu selon la revendication 1 ; **caractérisé en ce que** le paiement est réalisé par plusieurs utilisateurs rendant disponibles certains contenus pour chacun des utilisateurs.

3. Procédé de génération d'un menu selon la revendication 1 ou 2 ; **caractérisé en ce que** l'affichage associe visuellement chaque document avec l'identité de l'utilisateur ayant rendu disponible ledit document à partir du récepteur (1).

4. Procédé de génération d'un menu selon la revendication 2 ; **caractérisé en ce que** les étapes de paiement de la pluralité sont effectuées par des moyens de paiement différents.

5. Procédé de génération d'un menu selon la revendication 2; **caractérisé en ce que** l'affichage ordonne les contenus disponibles affichés en fonction des utilisateurs ayant payé lesdits contenus.

6. Procédé de génération d'un menu selon la revendication 1 ou 2; **caractérisé en ce qu'**il comporte une étape de gestion des paiements associés aux contenus disponibles, mise en oeuvre par un serveur distinct du récepteur utilisé pour la reproduction des contenus.

7. Procédé de génération d'un menu selon la revendication 1 ou 2; **caractérisé en ce qu'**il comporte une étape de téléchargement d'un contenu disponible dans la mémoire d'un récepteur destiné à le reproduire, et une étape d'effacement dudit contenu de la mémoire du récepteur lorsque la durée de disponibilité de ce contenu est écoulée.

8. Procédé de génération d'un menu selon la revendication 1 ou 2; **caractérisé en ce qu'**il comporte une étape d'interruption de la reproduction d'un document disponible et une étape de reprise de la reproduction une durée déterminée avant l'interruption de la reproduction.

9. Procédé de génération d'un menu selon la revendication 1 ou 2 ; **caractérisé en ce que** la liste des contenus disponibles est mémorisée dans une carte à puce, l'affichage incluant une étape de lecture des données mémorisée dans la carte pour afficher sur un récepteur lecteur de ladite carte la liste des contenus disponibles.

10. Procédé de génération d'un menu selon la revendication 1 ou 2, **caractérisé en ce que** la liste des contenus disponibles comprend au moins une indication des informations de disponibilité.

11. Récepteur audiovisuel (1) comportant un moyen de génération d'un menu de présentation de contenus audio ou audiovisuels accessibles par au moins un réseau numérique, un moyen de réception (4 ; 5) d'un ensemble d'identificateurs de contenus accessibles et au moins un moyen de paiement pour rendre disponibles certains contenus; **caractérisé en ce qu'**il comporte un moyen de récupération (3, 5, 12) des informations de disponibilité de l'ensemble des contenus à partir du récepteur (1), ledit moyen de génération générant des signaux d'affichage d'un menu apte à présenter une liste de l'ensemble desdits contenus disponibles.

12. Programme d'ordinateur **caractérisé en ce qu'**il comprend des instructions de code de programme pour la mise en oeuvre d'une étape de génération d'un menu de sélection incluse dans le procédé selon l'une quelconque des revendications 1 à 10 lorsque ce programme est exécuté par un processeur.
